# EUROPEAN PATENT SPECIFICATION

(11) **EP 3 509 040 B1**
(45) Date of publication and mention of the grant of the patent: **04.03.2026**
(21) Application number: 17845073.0
(22) Date of filing: 18.07.2017
(51) Int. Cl.: G07C 9/00, G07C 9/25, G07C 9/26

(54) **MOBILE TERMINAL UNLOCKING METHOD BASED ON FINGERPRINT RECOGNITION AND NFC**
ENTRIEGELUNGSVERFAHREN FÜR MOBILES ENDGERÄT AUF BASIS VON FINGERABDRUCKERKENNUNG UND NFC
PROCÉDÉ DE DÉVERROUILLAGE DE TERMINAL MOBILE FONDÉ SUR UNE RECONNAISSANCE D'EMPREINTE DIGITALE ET UNE CCP

(30) Priority: 05.09.2016 CN 201610801836
(43) Date of publication of application: 10.07.2019
(73) Proprietor: JRD Communication Inc., Shenzhen, Guangdong 518057 (CN)
(72) Inventor: PAN, Longxing, Shenzhen Guangdong 518057 (CN); CHEN, Dongchi, Shenzhen Guangdong 518057 (CN); ZHENG, Jiabin, Shenzhen Guangdong 518057 (CN)
(74) Representative: Murgitroyd & Company
(86) International application number: PCT/CN2017/093405
(87) International publication number: WO 2018/040770

(56) References cited:
- CA-A1- 2 892 113
- CN-A- 103 927 806
- CN-A- 104 091 376
- CN-A- 104 299 300
- CN-A- 105 046 773
- CN-A- 105 447 928
- CN-A- 106 355 717
- DE-U1- 202015 003 162
- US-A1- 2016 055 694
- US-B1- 9 165 323

## Description

### BACKGROUND

### Technical Field

The present invention relates to the field intelligent unlocking technologies, and in particular, to a fingerprint recognition and Near Field Communication (NFC)-based unlocking method using a mobile terminal.

### Related Art

With rapid development of science and technologies, new technologies are continuously applied to intelligent terminals, for example, the NFC technology and the fingerprint recognition technology, and application of such technologies greatly improves quality and convenience of life of people.

The NFC technology is a short-distance high-frequency radio technology, and runs within a distance of 10 cm at a frequency of 13.56 MHz. The NFC technology has three transmission rates, namely, 106 Kbit/s, 212 Kbit/s, and 424 Kbit/s. The NFC technology is evolved from non-contact radio frequency identification (RFID) and intercommunication and interconnection technologies, an induction-type card reader, an induction-type card, and a point-to-point function are integrated on a single chip, so that identification and data exchange can be performed with a compatible device within a short distance.

The NFC technology has been applied to the field of unlocking. For example, for a room equipped with an intelligent lock at home, a user can approach the intelligent lock with a mobile terminal (such as a mobile phone) carried around to perform unlocking, which is convenient, and it is not needed to carry a lot of keys around. However, any person holding the mobile terminal can unlock such an intelligent lock Consequently, security is not high enough. DE 202015003162U1, US2016/055694A1, and US9165323B1 are related prior arts for this field. Further related prior art are CN 104 091 376 A and CN 105 447 928 A.

Therefore, with regard to the foregoing disadvantages, the prior art still needs to be improved and developed.

### SUMMARY

The invention is defined by the appended independent method claim 1. Preferred features are set out in the dependent claims. Embodiments not falling within the scope of the claims are provided for illustration purposes only.

### BRIEF DESCRIPTION OF THE DRAWINGS

FIG. 1 is a flowchart of a preferred embodiment of a fingerprint recognition and NFC-based unlocking method using a mobile terminal according to the present invention.
FIG. 2 is a flowchart of a specific embodiment of a fingerprint recognition and NFC-based unlocking method using a mobile terminal according to the present invention.
FIG. 3 is a block diagram of a function principle of a preferred embodiment of a fingerprint recognition and NFC-based unlocking system using a mobile terminal according to the present invention.

### DETAILED DESCRIPTION

In order to make the objectives, technical solutions, and advantages of the present invention more comprehensible and clearer, the present invention is described in further detail below by describing embodiments with reference to the accompanying drawings. It should be understood that the specific embodiments described herein are merely used to explain the present invention rather than limit the present invention.

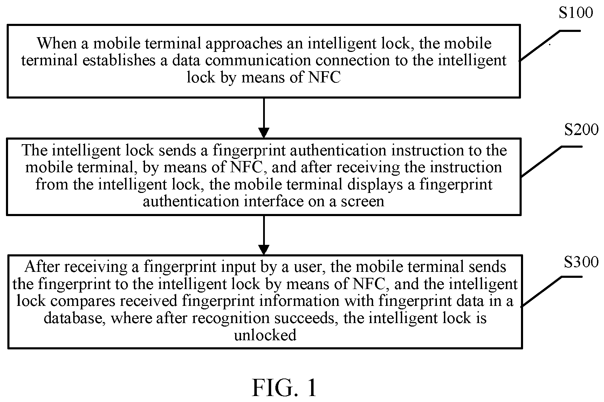

Referring to FIG. 1, FIG. 1 is a flowchart of a preferred embodiment of a fingerprint recognition and NFC-based unlocking method using a mobile terminal according to the present invention.

As shown in FIG. 1, this embodiment of the present invention provides a specific embodiment of a fingerprint recognition and NFC-based unlocking method using a mobile terminal, including the following steps.

Step S100: When the mobile terminal approaches an intelligent lock, the mobile terminal establishes a data communication connection to the intelligent lock by means of NFC.

In the present invention, before the step S100, the method further includes: when the mobile terminal establishes an NFC connection to the intelligent lock for a first time, setting an initial password of the intelligent lock by means of an intelligent unlocking application on the mobile terminal, and after a fingerprint of a user is recorded by means of the intelligent unlocking application, storing the fingerprint into a database of a storage module of the intelligent lock.

That is, when a user unlocks an intelligent lock having an NFC module by using a mobile terminal having an NFC module for a first time, for the purpose of security, and meanwhile, because the intelligent lock did not save fingerprint data of the user, it is needed to preset an initial password for the intelligent lock, and setting on the initial password is performed by means of an intelligent unlocking application (software) on the mobile terminal. When setting of the password is completed, it is also needed to record a fingerprint of a user by means of the intelligent unlocking application, and the fingerprint data recorded by the mobile terminal is sent by means of NFC to the database of the storage module of the intelligent lock for storage, so as to facilitate subsequently performing fingerprint comparison when the user performs unlocking by means of fingerprint recording.

The initial password includes 16 character strings, and the character strings include a digit, a letter, and an underline. For example, the password may be set to "123456abcdef _ _ _ _". Certainly, the password may be a combination made by a user according to a remembering habit and common characters. The initial password is used for changing the intelligent lock password and changing fingerprint information in the database of the intelligent lock. After the password is successfully set, a fingerprint of a authorized person can be added by the user to the database of the storage module of the intelligent lock. For example, if all of family members need to unlock an intelligent lock of a door, fingerprint data of other family members may be added to the database of the intelligent lock by a user who first starts to have the fingerprint recorded by means of the initial password. After information of the other members is successfully recorded, unlocking can also be performed in a fingerprint authentication manner.

The step S100 specifically includes: when the mobile terminal approaches the intelligent lock, performing data communication after an NFC module in the mobile terminal is paired with and connected to an NFC module in the intelligent lock; and after establishment of communication is completed, sending, by the mobile terminal by means of NFC, a command for unlocking the intelligent lock to the intelligent lock.

Step S200: The intelligent lock sends a fingerprint authentication instruction to the mobile terminal, by means of NFC, and after receiving the instruction from the intelligent lock, the mobile terminal displays a fingerprint authentication interface on a screen.

In the present invention, the step S200 specifically includes: after receiving the command for unlocking the intelligent lock sent by the mobile terminal, sending, by the intelligent lock by means of NFC, the fingerprint authentication instruction to the mobile terminal; and after the mobile terminal receives the fingerprint authentication instruction sent by the intelligent lock, displaying, by a mobile terminal system by means of the intelligent unlocking application, the fingerprint authentication interface on the screen of the mobile terminal, to prompt the user to input a fingerprint for authentication.

When the intelligent lock into which the fingerprint data of the user has been recorded is unlocked, if the user approaches the intelligent lock with the mobile terminal in hand, the intelligent lock senses an instruction indicating that the user needs to perform unlocking, and the intelligent lock immediately sends the fingerprint authentication instruction to the mobile terminal by means of NFC, after receiving the instruction from the intelligent lock, the mobile terminal displays a fingerprint authentication interface (this function is implemented by the intelligent unlocking application installed on the mobile terminal) on the screen of the mobile terminal, to prompt the user to input a fingerprint of the user within 10 seconds.

Step S300: After receiving a fingerprint input by a user, the mobile terminal sends the fingerprint to the intelligent lock by means of NFC, and the intelligent lock compares received fingerprint information with fingerprint data in the database, where after recognition succeeds, the intelligent lock is unlocked.

The fingerprint recognition technology is performing authentication based on texture lines generated by rough and uneven surfaces on the front skin of tips of fingers of a person and has the following main advantages: fingerprints are unique features of human bodies, and complexity of the fingerprints is enough to provide sufficient features for authentication; if it is needed to increase reliability, it is only needed to register more fingerprints, and authentication is performed on more fingers, up to ten fingers, and each fingerprint is unique; a speed of scanning a fingerprint is fast, and use is very convenient; when a fingerprint is read, the user needs to get the finger in contact with a fingerprint acquisition head, and direct contact between the finger and the fingerprint acquisition head is the most reliable method for reading a biological feature of a human body. Therefore, on the basis of performing unlocking by means of NFC, in the present invention, unlocking is performed after performing authentication by means of fingerprint recognition, and security of intelligent unlocking is effectively improved.

In the present invention, the step S300 specifically includes: after receiving the fingerprint input by the user, sending, by the mobile terminal by means of NFC, the fingerprint to the intelligent lock, and comparing, by the intelligent lock, the received fingerprint information with the fingerprint data in the database of the storage module, and determining whether the fingerprint information exists in the database of the storage module, where provided that the user has recorded the fingerprint data in to the database of the storage module of the intelligent lock in advance, recognition succeeds after the fingerprint is input, and the intelligent lock is further unlocked. That is, when the fingerprint information exists in the database of the intelligent lock storage module, the recognition succeeds, and the intelligent lock is unlocked. To avoid an error during fingerprint recognition, three fingerprint recognition opportunities are provided, usually, for a fingerprint that has been recorded, three times can enable the user to unlock the intelligent lock. However, when comparison of the fingerprint information continuously fails for three times, the fingerprint may be not a fingerprint of the user, and there is a risk of burglary, the user is informed of an unlocking failure and that the user needs to wait for a predetermined time before performing unlocking again. Moreover, the predetermined time may be set by the user according to actual requirements, and is, preferably, 24 hours.

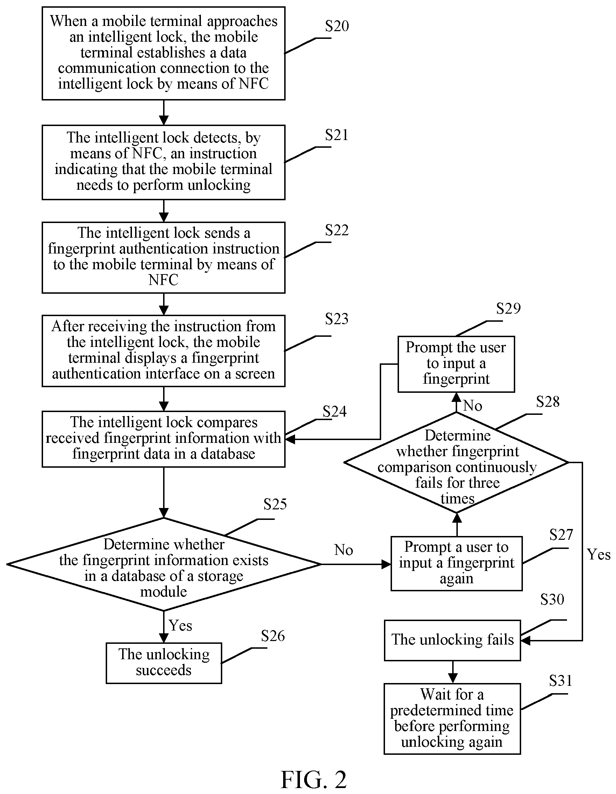

To make the fingerprint recognition and NFC-based unlocking method by using a mobile terminal more comprehensible, a procedure of a specific embodiment is provided below. Referring to FIG. 2, FIG. 2 is a flowchart of a specific embodiment of a fingerprint recognition and NFC-based unlocking method using a mobile terminal according to the present invention.

As shown in FIG. 2, the procedure of the specific embodiment includes:
S20: When the mobile terminal approaches an intelligent lock, the mobile terminal establishes a data communication connection to the intelligent lock by means of NFC.
S21: The intelligent lock detects, by means of NFC, an instruction indicating that the mobile terminal needs to perform unlocking.
S22: The intelligent lock sends a fingerprint authentication instruction to the mobile terminal by means of NFC.
S23: After receiving the instruction from the intelligent lock, the mobile terminal displays a fingerprint authentication interface on a screen.
S24: A user inputs a fingerprint, the mobile terminal sends fingerprint information to the intelligent lock by means of NFC, and the intelligent lock compares the received fingerprint information with fingerprint data in the database.
S25: Determine whether the fingerprint information exists in a database of a storage module.
S26: If the fingerprint information exists in a database of a storage module of the intelligent lock, indicating a recognition success, unlock the intelligent lock.
S27: If the fingerprint information does not exist in the database of the storage module of the intelligent lock, prompt the user to input a fingerprint again.
S28: Determine whether fingerprint comparison continuously fails for three times, and if yes, perform S30; otherwise, perform S29.
S29: If fingerprint determining is continuously performed less than three times, prompt the user to input a fingerprint again, and go back to S24 to continue to perform other steps.
S30: If fingerprint comparison continuously fails for three times, the unlocking fails.
S31: When comparison of the fingerprint information continuously fails for three times, inform the user of an unlocking failure and that the user needs to wait for a predetermined time before performing unlocking again.

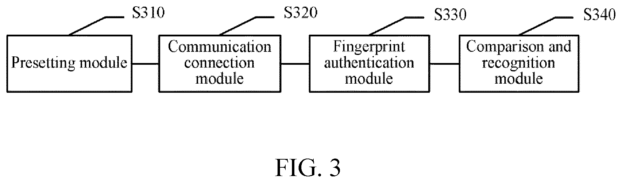

Based on the foregoing embodiments, the present invention further provides a fingerprint recognition and NFC-based unlocking system using a mobile terminal. Referring to FIG. 3, FIG. 3 is a block diagram of a function principle of a preferred embodiment of a fingerprint recognition and NFC-based unlocking system using a mobile terminal according to the present invention.

As shown in FIG. 3, the system includes the following modules.

A presetting module S310 is configured to: when the mobile terminal establishes an NFC connection to an intelligent lock for a first time, set an initial password of the intelligent lock by means of an intelligent unlocking application on the mobile terminal, and after a fingerprint of a user is recorded by means of the intelligent unlocking application, store the fingerprint into a database of a storage module of the intelligent lock. Details are described above.

A communication connection module S320 is configured to: when the mobile terminal approaches the intelligent lock, control the mobile terminal to establish a data communication connection to the intelligent lock by means of NFC. Details are described above.

A fingerprint authentication module S330 is configured to control the intelligent lock to send a fingerprint authentication instruction by means of NFC to the mobile terminal, where after receiving the instruction from the intelligent lock, the mobile terminal displays a fingerprint authentication interface on a screen. Details are described above.

A comparison and recognition module S340 is configured to: after the mobile terminal receives the fingerprint input by the user, send the fingerprint to the intelligent lock by means of NFC, where the intelligent lock compares received fingerprint information with fingerprint data in the database, and after recognition succeeds, the intelligent lock is unlocked. Details are described above.

Further, in the fingerprint recognition and NFC-based unlocking system using a mobile terminal, the communication connection module S320 specifically includes the following units.

A connection and pairing unit is configured to: when the mobile terminal approaches the intelligent lock, perform data communication after controlling an NFC module in the mobile terminal to be paired with and connected to an NFC module in the intelligent lock. Details are described above.

An unlocking command sending unit is configured to after establishment of communication is completed, control the mobile terminal to send, by means of NFC, a command for unlocking the intelligent lock to the intelligent lock. Details are described above.

In the fingerprint recognition and NFC-based unlocking system using a mobile terminal, the fingerprint authentication module S330 specifically includes the following units.

An authentication instruction sending unit is configured to: after the intelligent lock receives the command for unlocking the intelligent lock sent by the mobile terminal, control the intelligent lock to send the fingerprint authentication instruction to the mobile terminal by means of NFC. Details are described above.

An authentication prompting unit is configured to: after the mobile terminal receives the fingerprint authentication instruction sent by the intelligent lock, control a mobile terminal system to display the fingerprint authentication interface on the screen of the mobile terminal by means of the intelligent unlocking application, to prompt a user to input a fingerprint for authentication. Details are described above.

In the fingerprint recognition and NFC-based unlocking system using a mobile terminal, the comparison and recognition module S340 specifically includes the following units.

A comparison and determining unit is configured to: after the mobile terminal receives the fingerprint input by the user, send the fingerprint to the intelligent lock by means ofNFC, where the intelligent lock compares the received fingerprint information with the fingerprint data in the database of the storage module, and determines whether the fingerprint information exists in the database of the storage module. Details are described above.

A recognition failure handling unit is configured to: when the fingerprint information exists in the database of the storage module of the intelligent lock, indicating a recognition success, unlock the intelligent lock, and when comparison of the fingerprint information continuously fails for three times, inform the user of an unlocking failure and that the user needs to wait for a predetermined time before performing unlocking again. Details are described above.

In conclusion, the present invention discloses a fingerprint recognition and NFC-based unlocking method using a mobile terminal, including: when a mobile terminal approaches an intelligent lock, establishing, by the mobile terminal, a data communication connection to the intelligent lock by means of NFC; sending, by the intelligent lock by means of NFC, an fingerprint authentication instruction to the mobile terminal, and after receiving the instruction from the intelligent lock, displaying, by the mobile terminal, a fingerprint authentication interface on a screen; and after receiving a fingerprint input by a user, sending, by the mobile terminal by means of NFC, the fingerprint to the intelligent lock, and comparing, by the intelligent lock, received fingerprint information with fingerprint data in a database, where after recognition succeeds, the intelligent lock is unlocked. In the present invention, intelligent unlocking is performed by means of NFC in combination with fingerprint recognition. When a user performs unlocking with a mobile terminal in hand, the mobile terminal approaches an intelligent lock, and a fingerprint authentication interface pops up on an interface of the mobile terminal, to prompt the user to input a fingerprint of the user. The mobile terminal sends the collected fingerprint by means of NFC to the intelligent lock, the intelligent lock compares the obtained fingerprint data with preset fingerprint data in a database for recognition, and when the database includes the fingerprint data, the intelligent lock is unlocked. Not only convenience is brought for the user to perform unlocking, but also security is improved.

Certainly, a person of ordinary skill in the art should understand that all or some of the steps of the method according to the foregoing embodiments may be implemented by a program instructing relevant hardware (such as a processor or a controller). The program may be stored in a computer readable storage medium. When the program is run, the steps of the embodiments of the method may be included. The storage medium may be a memory, a magnetic disk, an optical disc, or the like.

## Claims

1. A fingerprint recognition and near field communication, NFC, -based unlocking method to unlock an intelligent lock using a mobile terminal, the method comprising:
when the mobile terminal approaches the intelligent lock, by the intelligent lock, controlling the mobile terminal to establish an NFC data communication connection with the intelligent lock;
sending, by the intelligent lock by means of NFC, a fingerprint authentication instruction to the mobile terminal;
after receiving the fingerprint authentication instruction from the intelligent lock, displaying, by the mobile terminal, a fingerprint authentication interface on a screen to receive a fingerprint input from a user of the mobile terminal;
after receiving the fingerprint input from the user, sending, by the mobile terminal by means of NFC, the received fingerprint input to the intelligent lock;
comparing, by the intelligent lock, the received fingerprint data with fingerprint data stored in a database of the intelligent lock for recognition, wherein
after recognition succeeds, the intelligent lock is unlocked;
wherein the method further comprises:
when the mobile terminal is controlled to establish an NFC connection with the intelligent lock for a first time, setting an initial intelligent lock password by means of an intelligent unlocking application of the mobile terminal;
after the initial intelligent lock password is successfully set, recording initial fingerprint data of the user of the mobile terminal by means of the intelligent unlocking application;
storing, by the intelligent lock, the received initial fingerprint data into the database of the intelligent lock,
wherein the initial intelligent lock password is used for adding fingerprint data of additional authorized users to the database of the intelligent lock;
wherein fingerprint data of other family members are added to the database of the intelligent lock by the user who first starts to have a fingerprint recorded by means of the initial intelligent lock password, wherein after information of the other family members is successfully recorded, unlocking is performed in a fingerprint authentication manner.

2. The fingerprint recognition and NFC-based unlocking method to unlock the intelligent lock using the mobile terminal according to claim 1, **characterized in that** the initial intelligent lock password comprises 16 character strings, the character strings comprise a digit, a letter, and an underline.

3. The fingerprint recognition and NFC-based unlocking method to unlock the intelligent lock using the mobile terminal according to claim 1, **characterized in that** the step of when the mobile terminal approaches the intelligent lock, by the intelligent lock, controlling the mobile terminal to establish the NFC data communication connection with the intelligent lock comprises:
when the mobile terminal approaches the intelligent lock, performing data communication after an NFC module in the mobile terminal is paired with and connected to an NFC module in the intelligent lock; and
after establishment of communication is completed, sending, by the mobile terminal by means of NFC, a command for unlocking the intelligent lock to the intelligent lock.

## Patentansprüche

1. Fingerabdruckerkennung und auf Nahfeldkommunikation, NFC, basierendes Entsperrenverfahren zum Entsperren eines intelligenten Schlosses mit einem mobilen Endgerät, wobei das Verfahren Folgendes umfasst:
wenn das mobile Endgerät in die Nähe des intelligenten Schlosses kommt, Steuern, durch das intelligente Schloss, des mobilen Endgeräts, um eine NFC-Datenkommunikationsverbindung mit dem intelligenten Schloss herzustellen,
Senden, durch das intelligente Schloss mittels NFC, einer Fingerabdruck-Authentifizierungsanweisung an das mobile Endgerät,
nach Empfangen der Fingerabdruck-Authentifizierungsanweisung vom intelligenten Schloss, Anzeigen einer Fingerabdruck-Authentifizierungsschnittstelle vom mobilen Endgerät auf einem Bildschirm, um eine Fingerabdruckeingabe von einem Benutzer des mobilen Endgeräts zu empfangen;
nach Empfangen der Fingerabdruckeingabe vom Benutzer, Senden, durch das mobile Endgerät mittels NFC, der empfangenen Fingerabdruckdaten an das intelligente Schloss;
Vergleichen, durch das intelligente Schloss, der empfangenen Fingerabdruckdaten durch das intelligente Schloss mit den in der Datenbank des intelligenten Schlosses gespeicherten Fingerabdruckdaten zur Erkennung, wobei
nach erfolgreicher Erkennung das intelligente Schloss entsperrt wird;
wobei das Verfahren ferner umfasst:
wenn das mobile Endgerät gesteuert wird, um eine NFC-Verbindung mit dem intelligenten Schloss erstmals herzustellen, Festlegen eines initialen intelligenten Schloss-Passworts über eine intelligente Entsperreanwendung des mobilen Endgeräts;
nach erfolgreicher Festlegung des initialen intelligenten Schloss-Passworts, Aufzeichnen von initialen Fingerabdruckdaten des Benutzers des mobilen Endgeräts über die intelligente Entsperreanwendung;
Speichern der empfangenen initialen Fingerabdruckdaten über das intelligente Schloss in die Datenbank des intelligenten Schlosses,
wobei das initiale intelligente Schloss-Passwort zum Hinzufügen von Fingerabdruckdaten weiterer autorisierter Benutzer zur Datenbank des intelligenten Schlosses verwendet wird;
wobei die Fingerabdruckdaten anderer Familienmitglieder durch den Benutzer, der zuerst beginnt, einen Fingerabdruck zu haben, der mit dem initialen intelligenten Schloss-Passwort aufgezeichnet wurde, zur Datenbank des intelligenten Schlosses hinzugefügt werden, wobei nach erfolgreicher Aufzeichnung der Informationen anderer Familienmitglieder die Entsperrung auf Fingerabdruck-Authentifizierungsweise erfolgt.

2. Fingerabdruckerkennung und auf NFC basierendes Entsperrenverfahren zum Entsperren des intelligenten Schlosses mit dem mobilen Endgerät nach Anspruch 1, **dadurch gekennzeichnet, dass** das initiale intelligente Schloss-Passwort 16 Zeichenketten umfasst, wobei die Zeichenketten eine Ziffer, einen Buchstaben und einen Unterstrich umfassen.

3. Fingerabdruckerkennung und auf NFC basierendes Entsperrenverfahren zum Entsperren des intelligenten Schlosses mit dem mobilen Endgerät nach Anspruch 1, **dadurch gekennzeichnet, dass** der Schritt, in dem, wenn das mobile Endgerät in die Nähe des intelligenten Schlosses kommt, durch das intelligente Schloss das mobile Endgerät gesteuert wird, um die NFC-Datenkommunikationsverbindung mit dem intelligenten Schloss herzustellen, umfasst:
wenn das mobile Endgerät in die Nähe des intelligenten Schlosses kommt, Ausführen einer Datenkommunikation, nachdem ein NFC-Modul im mobilen Endgerät mit einem NFC-Modul im intelligenten Schloss gepaart und verbunden wurde; und
nach Abschluss von Kommunikationsverbindung, Senden, durch das mobile Endgerät, über NFC eines Befehls zum Entsperren des intelligenten Schlosses an das intelligente Schloss.

## Revendications

1. Un procédé de déverrouillage basé sur la reconnaissance d'empreinte digitale et la communication en champ proche, CCP, afin de déverrouiller un verrou intelligent en utilisant un terminal mobile, le procédé comprenant :
lorsque le terminal mobile s'approche du verrou intelligent, la commande du terminal mobile, par le verrou intelligent, afin d'établir une connexion de communication de données CCP avec le verrou intelligent ;
l'envoi, par le verrou intelligent au moyen de la CCP, d'une instruction d'authentification par empreinte digitale au terminal mobile ;
après réception de l'instruction d'authentification par empreinte digitale en provenance du verrou intelligent, l'affichage, par le terminal mobile, d'une interface d'authentification par empreinte digitale sur un écran afin de recevoir une entrée d'empreinte digitale de la part d'un utilisateur du terminal mobile ;
après réception de l'entrée d'empreinte digitale de la part de l'utilisateur, l'envoi, par le terminal mobile au moyen de la CCP, de l'entrée d'empreinte digitale reçue au verrou intelligent ;
la comparaison, par le verrou intelligent, des données d'empreinte digitale reçues avec des données d'empreinte digitale stockées dans une base de données du verrou intelligent pour reconnaissance, dans lequel après que la reconnaissance a réussi, le verrou intelligent est déverrouillé ;
le procédé comprenant en outre :
lorsque le terminal mobile est commandé afin d'établir une connexion CCP avec le verrou intelligent pour la première fois, la mise en place d'un mot de passe de verrou intelligent initial au moyen d'une application de déverrouillage intelligent du terminal mobile ;
après que le mot de passe de verrou intelligent initial a été mis en place avec succès, l'enregistrement de données d'empreinte digitale initiales de l'utilisateur du terminal mobile au moyen de l'application de déverrouillage intelligent ;
le stockage, par le verrou intelligent, des données d'empreinte digitale initiales reçues dans la base de données du verrou intelligent,
dans lequel le mot de passe de verrou intelligent initial est utilisé afin d'ajouter des données d'empreinte digitale d'utilisateurs autorisés supplémentaires à la base de données du verrou intelligent ;
dans lequel des données d'empreinte digitale d'autres membres de la famille sont ajoutées à la base de données du verrou intelligent par l'utilisateur qui a été le premier à avoir enregistré une empreinte digitale au moyen du mot de passe de verrou intelligent initial, dans lequel après que les informations des autres membres de la famille ont été enregistrées avec succès, le déverrouillage est réalisé par le biais de l'authentification par empreinte digitale.

2. Le procédé de déverrouillage basé sur la reconnaissance d'empreinte digitale et la CCP afin de déverrouiller le verrou intelligent en utilisant le terminal mobile selon la revendication 1, **caractérisé en ce que** le mot de passe de verrou intelligent initial comprend des chaînes de 16 caractères, les chaînes de caractères comprenant un chiffre, une lettre, et un trait bas.

3. Le procédé de déverrouillage basé sur la reconnaissance d'empreinte digitale et la CCP afin de déverrouiller le verrou intelligent en utilisant le terminal mobile selon la revendication 1, **caractérisé en ce que** l'étape de, lorsque le terminal mobile s'approche du verrou intelligent, commande du terminal mobile, par le verrou intelligent, afin d'établir la connexion de communication de données CCP avec le verrou intelligent comprend :
lorsque le terminal mobile s'approche du verrou intelligent, la réalisation d'une communication de données après qu'un module CCP dans le terminal mobile a été appairé avec et connecté à un module CCP dans le verrou intelligent ; et
après que l'établissement de communication a été accompli, l'envoi au verrou intelligent par le terminal mobile au moyen de la CCP, d'une commande pour le déverrouillage du verrou intelligent.
